Europäisches Patentamt

European Patent Office

Office européen des brevets

(19)

(11) Publication number : **0 475 728 A2**

(12) # EUROPEAN PATENT APPLICATION

(21) Application number : **91308250.9**

(22) Date of filing : **10.09.91**

(51) Int. Cl.[5] : **C09J 123/08, B32B 27/00**

(30) Priority : **10.09.90 US 580321**
**28.06.91 US 722698**

(43) Date of publication of application :
**18.03.92 Bulletin 92/12**

(84) Designated Contracting States :
**AT BE CH DE DK ES FR GB GR IT LI LU NL SE**

(71) Applicant : **SCHLEGEL CORPORATION**
**1555 Jefferson Road, P.O. Box 23197**
**Rochester New York 14692-3197 (US)**

(72) Inventor : **Berry, David Harold**
**904 S.Dogwood**
**Maryville, TN 37801 (US)**
Inventor : **Bush, Thomas F.**
**1732 Scenic Drive**
**Maryville, TN 37801 (US)**
Inventor : **McManus, Michael John**
**4745 Scenic Point Drive**
**Louisville TN 37777 (US)**

(74) Representative : **Carpmael, John William**
**Maurice et al**
**CARPMAELS & RANSFORD 43 Bloomsbury**
**Square**
**London, WC1A 2RA (GB)**

(54) **Bonded composite of a layer and hot melt adhesive for direct bonding to EPDM rubber.**

(57)   A bonded composite of a layer of fabric or film and a specialty ethylene based hot melt polymer adhesive is disclosed, which is adapted to be directly bonded to an EPDM (ethylene/propylene/diene/monomer) rubber. The fabric comprises a backing material to which a pile material is secured by weaving or the like. The fabric material may comprise a natural organic fiber, such as cotton or wool, or a synthetic or non-synthetic polymeric material, such as polypropylene, or nylon. The film may comprise a polyester, such as Mylar (registered trademark of the DuPont Corporation). The hot melt adhesive has been developed to satisfy particular requirements set forth by the inventors and is designated 375-3.

EP 0 475 728 A2

The invention relates generally to a bonded composite of a layer of fabric or film and EPDM (ethylene/propylene/diene/monomer) rubber, and more particularly to a bonded composite of a layer of fabric or film and a specialty ethylene based hot melt polymer adhesive for direct bonding to EPDM rubber.

Description of the Prior Art:

U.S. Patent No. 4,652,475, which issued to Haney et al on March 24, 1987, discloses a heat setting compounded formulation incorporating a formaldehyde donor/acceptor system for effectively bonding a thermoplastic layer of polyethylene, polyvinyl chloride, or chlorinated polyethylene to thermoplastic and elastomeric materials.

U.S. Patent No. 4,537,825, which issued to Yardley on August 27, 1985 discloses a bonded composite of a thermoplastic elastomeric blend of vulcanized EPDM particles with an EPDM or EPM rubber. The bonding is achieved without the use of an adhesive interlayer.

U.S. Patent No. 4,767,658, which issued to Lorenz on August 30, 1988, discloses bonding together the edges of rubber sheets by interposing a thermoplastic adhesive strip therebetween, and then activating the composite by heat.

U.K. Patent Application G.B. 2,109,042 A, which was published on May 25, 1983, discloses adhesively securing strips of a low friction polymeric material precut to an appropriate size to the surface and lips of a motor vehicle window opening elastomeric sealing strip.

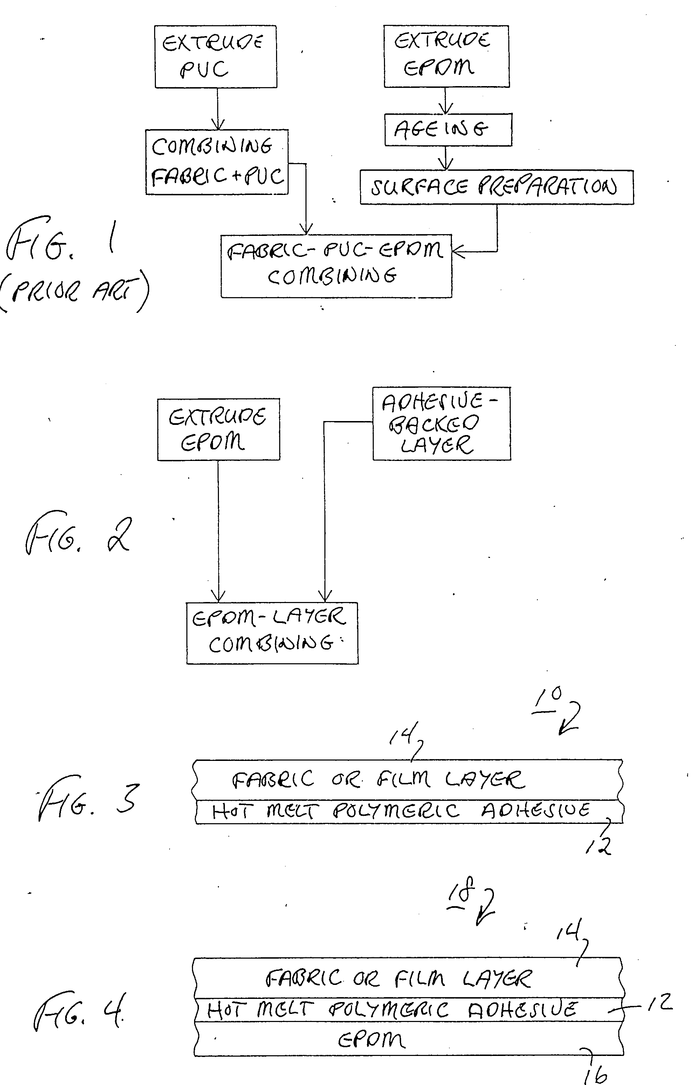

A method is also known in the prior art, as illustrated in Figure 1, for bonding a fabric to an EPDM rubber for forming an elastomeric strip, preferably of the channel-type. The elastomeric strip is adapted to grip and cover edge flanges on the periphery of a vehicle door, a door opening, or the like, for sealing and/or for decorative purposes. This bonded combination is achieved by initially extruding a PVC (polyvinyl chloride) material. The fabric is coated with latex, for example, and heated and pressed into engagement with the PVC. The EPDM rubber material is extruded and cured and aged for 72 hours. The bonding surface thereof is roughened by grinding or flame treating the bonding surface. A hot melt adhesive is applied to the bonding surface of the PVC material, which is opposite the surface to which the fabric has been secured, and also to the roughened bonding surface of the EPDM. The bonding surfaces are pressed together under heat and pressure to form a bonded composite of a fabric, PVC, and EPDM rubber.

One problem with the prior art method of forming a bonded composite of PVC, fabric, and EPDM is that it is slow and expensive. Another problem with this conventional method is that it is scrap intensive, because, for example, the meticulous task of adhesive placement has to be performed in conjunction with the fabric wrapping operation. Any adhesive extending past edges of the fabric can result in a messy product. Attempts at trying to successfully bond fabric or film directly to EPDM rubber, using a hot melt adhesive layer, have been unsuccessful. The bonding strength has been inadequate, and the fabric or film separates from the EPDM when the bonded composite is subjected to temperatures over 120° Fahrenheit., This problem of lack of success in bonding a fabric to EPDM by using a hot melt adhesive interposed therebetween, has been solved by developing in conjunction with the Exxon Corporation, a specialty hot melt adhesive based on a copolymer of ethylene and methacrylic and (EMA) blended with polypropylene that satisfies particular requirements of heat stability, viscosity, high melting temperatures, and excellent adhesion or bonding strength, for example, as defined by the inventors. The developed specialty hot melt adhesive formulation is provided by the Exxon Corporation under its designation 357-3. Products comprising bonded composites manufactured by the Schlegel Corporation utilizing the specially developed hot melt adhesive have proven to be highly commercially successful.

Summary of the Invention:

In accordance with a preferred embodiment of this invention, a bonded adhesive-backed layer composite of a layer of fabric or polyester film and a hot melt adhesive is disclosed which comprises a specialty ethylene based hot melt polymer adhesive formulation based on a copolymer of ethylene and methacrylic and (EMA) blended with polypropylene bonded to the layer. The hot melt adhesive formulation designated 357-3 has particular utility in forming a bonded adhesive-backed fabric composite.

In another aspect of the invention, a bonded rubber composite is disclosed comprising a layer of fabric or polyester film, a thermosetting elastomer, such as an ethylene/propylene/diene/ monomer (EPDM) rubber, and a specialty ethylene based hot melt polymer adhesive formulation interposed between the layer and EPDM for bonding the two together under heat and pressure. Particular utility is found in forming a bonded rubber composite of a fabric and EPDM by a hot melt polymeric adhesive designated 357-3.

In a further aspect of the invention, the specialty hot melt adhesive is heated to 280 plus or minus 20° Fahrenheit, and the thermosetting elastomer (EPDM) is heated to 300 plus or minus 20° Fahrenheit on its bonding surface.

In a further aspect of the invention, a method is disclosed for forming a bonded adhesive-backed layer composite of a layer of fabric or polyester film with a specialty ethylene based hot melt polymer adhesive comprising the steps of presenting a layer of the fabric or polyester film having a bonding surface, and applying a specialty hot melt adhesive formulation directly into engagement with the bonding surface, for securement thereto. The bonded adhesive-backed layer composite of the layer and hot melt adhesive is adapted to be directly bonded to a bonding surface of a thermosetting elastomer (EPDM) upon heating the hot melt adhesive and/or the EPDM bonding surface, and pressing the two together.

The invention and its advantages will become more apparent from the detailed description of the invention presented below.

Brief Description of the Drawings:

In the detailed description of the preferred embodiments of this invention presented below, reference is made to the accompanying drawings, in which:

Figure 1 is a block diagram illustrating a prior art method for forming a bonded composite of a PVC, fabric, and EPDM;

Figure 2 is a block diagram similar to Figure 1 illustrating a preferred method of this invention, in which a layer of fabric or Mylar polyester, and a layer of EPDM rubber are provided, and a specialty ethylene based hot melt polymer adhesive formulation is interposed between the layers for bonding the two together under heat and pressure;

Figure 3 is a segmental side elevational view of an exemplary bonded adhesive-backed layer composite comprising a specialty ethylene based hot melt polymer adhesive formulation bonded to a layer of fabric or polyester film;

Figure 4 is a view similar to Figure 3 of another bonded rubber composite comprising a layer of fabric or polyester film, a layer of EPDM, and a specialty ethylene based hot melt polymer adhesive formulation interposed between the layers for bonding the two together under heat and pressure;

Figure 5 is an end view of an edge protector trim or weatherstrip having a layer bonded onto a portion of the strip; and

Figure 6 is an end view of another embodiment of a trim or weatherstrip having a layer bonded onto a portion thereof.

Description of the Preferred Embodiments:

Because certain fabrics and elastomeric trim of weatherstrip manufacturing methods and equipment are well known, the following description is directed in particular to those elements forming, cooperating directly with, or relating to the present invention. Elements and manufacturing equipment not specifically shown or described herein are selectable from those known in the pertinent art.

With reference to Figure 1, a prior art method of bonding a fabric into engagement with a thermosetting elastomer, such as an ethylene/propylene/diene/monomer (EPDM) rubber is disclosed. This known method is slow and expensive, initially involving a first operation of bonding the fabric to a PVC (polyvinyl chloride) material, and then a second operation of combining the PVC with the EPDM. Initially, the fabric has to be coated with latex and then heated and pressed into engagement with one surface of the PVC. The EPDM has to be aged for 72 hours, and the bonding surface thereof has to be ground and/or flame treated, to roughen the bonding surface. To bond the fabric-PVC combination to the EPDM, hot melt adhesive is applied to the opposite surface of the PVC and to the bonding surface of the EPDM, and both surfaces are pressed together under heat and pressure. This current known method is slow and expensive, because of the many operations involved, the added cost of the PVC, and the large amount of scrap generated in the PVC handling operation and in the operation combining the fabric with the PVC.

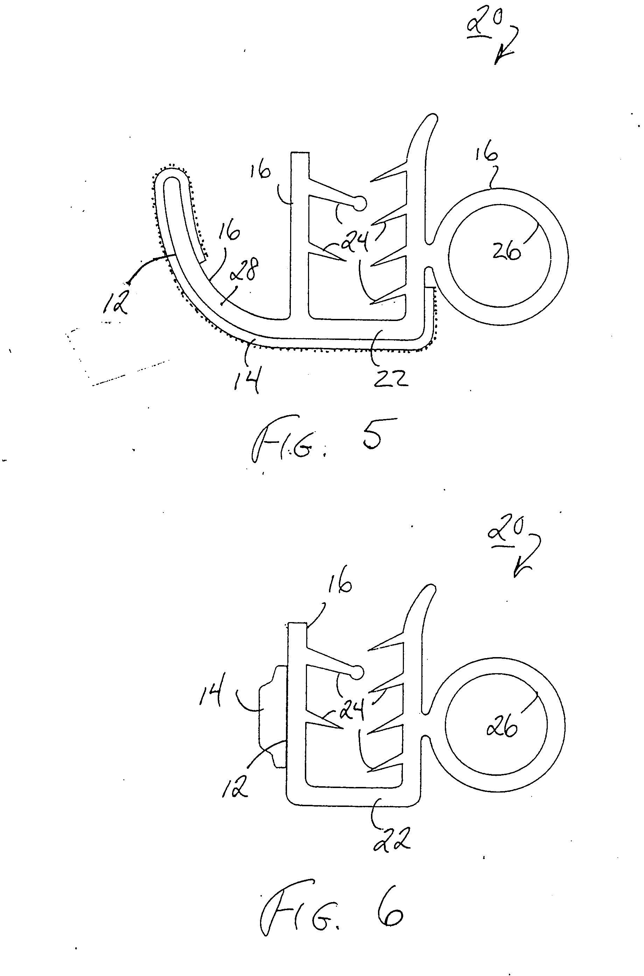

With reference to Figure 2, a preferred embodiment of a streamlined method of this invention is illustrated for directly bonding a layer of fabric or polyester film, such as Mylar (registered trademark of the DuPont Corporation) to EPDM rubber by the use of a specialty formulated ethylene based hot melt polymer adhesive. The polymer adhesive, sold under the Exxon Trademark STC 357-3 is a copolymer of ethylene and methacrylic acid (EMA) containing 20-24% methacrylate, blended with polypropylene in a ratio of about 70-80% EMA to 20-30% polypropylene. For the purposes of this invention, the fabric comprises a backing yarn material to which a pile material is secured by weaving or the like. The backing and pile materials may comprise natural organic fibers, such as cotton, and wool, or synthetic or semi-synthetic polymers, of which nylon, rayon, and polypropylene are exemplary. The fabric materials can also be any combination of the above materials, formed by different construction methods, such as knitting, weaving, weaving with pile, fibrous, non-fibrous, and composite materials, such as those used for covering seats. The fabric is bonded to the EPDM rubber by a specialty formulated ethylene based hot melt adhesive designated 357-3, or equivalents thereof.

The term EPDM rubber as used in this invention refers to thermosetting elastomers, based on ethylene and propylene monomers. The International Institute of Synthetic Rubber Producers (IISRP) classifications for these ethylene-propylene rubbers are:

(1) EPDM-terpolymer of ethylene, propylene and a diene with residual unsaturated portion of the diene in the side chain.

(2) EPM-copolymers of ethylene and propylene. Any elastomers classified as EPDM or EPM by IISRP are specifically included in the scope of this invention.

The thermosetting elastomers further have the property at room temperature of being capable of recovering substantially in shape and size, after the removal of a deforming force. However, such thermosetting elastomers cannot be reheated and reshaped.

In order to make the simplified method illustrated in Figure 2 workable, a specialty hot melt polymeric adhesive 12 is necessary capable of directly bonding a layer of fabric or Mylar polyester film to EPDM rubber 16 upon the application of heat and pressure. This must be done without requiring the use of an expensive grinding or flame treating operation to roughen the surface of the EPDM, or the use of an intermediate PVC (polyvinyl chloride) material for combining the layer to the prepared bonding surface of the EPDM. A specialty hot melt polymeric adhesive formulation for bonding a fabric coating to EPDM has been developed to meet particular requirements defined by the inventors, such as heat stability, viscosity, high melting temperature and excellent bonding strength. The polymer adhesive, sold under the Exxon Trademark STC 357-3 is a copolymer of ethylene and methacrylic acid (EMA) containing 20-24% methacrylate, blended with polypropylene in a ratio of about 70-80% EMA to 20-30% polypropylene, and will be referred to as STC 357-3 herein for convenience.

An adhesive-backed layer composite 10 utilizing the 357-3 hot melt polymeric adhesive 12 comprises a layer 14 to which the adhesive 12 is bonded or laminated, as shown in Figure 3. In one application, the hot melt polymeric adhesive 12 is extruded across the width of the backing of a known type of transported pile fabric layer 14, which is then fed over a chill roll, to cool it. The chill roll is provided with a temperature control unit, for controlling the temperature of the circulation fluid in the roll. The adhesive backed pile fabric 10 is slit to width by slitters of the known type, such as sonic or mechanical slitters. Separate strips of the adhesive-backed pile fabric 10 are joined together by any suitable means, and the joined strips are wound into rolls for storage or transport to customers. The bonded or laminated fabric-adhesive strips are stable and may be stored for up to several months.

A preferred method of bonding the adhesive-backed layer composite 10 to the EPDM rubber 16 to form a bonded rubber composite 18, illustrated in Figures 2 and 4 will now be described. The EPDM 16 is extruded at a preselected speed, and the adhesive-backed layer composite 10 in web form is advanced or transported from a roll at a matching speed. An adhesive preheating unit of known type, not shown, is interposed between the adhesive-backed layer supply roll and the EPDM-fabric-layer combining unit for heating the hot melt adhesive 12 on the layer to a temperature of 280 plus or minus 20° Fahrenheit. The adhesive preheating is achieved by a hot air blower that blows on to the adhesive surface prior to its entry into the combining unit. The adhesive-backed layer composite 10 in the preheating zone is supported by a hollow tube that has water or compressed air flowing therethrough to prevent heat buildup in unwanted areas of composite 10. The hot air blower has a heat collector manifold that exhausts to the outside, and the preheating unit is mounted for lateral movement between a run position in which it is in position to preheat the hot melt adhesive, and a retracted stop position. The extruded EPDM is transported through a preheating unit, not shown, for heating the EPDM 16 to a temperature of 300 plus or minus 20° Fahrenheit on its bonding surface. The EPDM preheating unit can be heated by any suitable gas fired heat source.

Alternatively, the adhesive backed layer may be bonded to the vulcanized EPDM ruber by heating the rubber only to a temperature of between about 260-300°F, preferably about 275°F and attaching the adhesive backed layer by pressing it to the EPDM.

The EPDM fabric-layer combining unit preferably comprises a modular design concept utilizing progressive transition blocks, each having a base block cored for heat exchange, and a pressure roller for pressing an upper block into engagement with the base block. The progressive transition blocks utilize basic roll form techniques, for combining and forming the bonded rubber composite 18 of EPDM 16, hot melt adhesive 12 and layer 14, as they are joined together. A coolant fluid is transported through the base block, and the temperature thereof is controlled by any suitable heat exchange unit. The bonded rubber composite 18 is fed through a straight-line conveyer, where the hot-melt adhesive is slowly cooled to the point of sufficient strength to keep the layer from slipping. The bonded rubber composite 18 must not be cooled too rapidly, as this would reduce the ultimate bond strength. The partially cooled rubber composite 18 is transported through any suitable cooling unit, such as through one or more turns in a 180° turn-around cooling unit, to form a finished product.

With reference to Figures 5 and 6, one possible application for the bonded rubber composite 18 of this invention is in a known edge protector weather or trim strip 20. The edge protector strip has a U-shaped body 22, gripping fins 24, and a bulb 26, all preferably extruded from an EPDM material. The edge protector strip of Figure 5 further has a sealing lip 28 of EPDM material, integral with body 22. A layer 14 of fabric or the like is bonded to lip 28 by the specialty hot melt polymeric adhesive 12. In Figure 6, a decorative layer 14 of fabric or film is bonded to one leg of body 22. Another possible application of the layer 14 is replacing flock on weatherseals. Also, a special layer could be bonded onto a rubber support for reducing electrical interference thereto in electrical applications.

While presently preferred embodiments of the invention have been shown and described with particularity, it will be appreciated that various changes and modifications, particularly to the manufacturing equipment, may suggest themselves to one having ordinary skill in the art upon being apprised of the present invention.

## Claims

1. A bonded adhesive-backed composite material which comprises a copolymer (12) of ethylene and methacrylic acid blended with polypropylene in a ratio of about 70-80% of the polymer to 20-30% polypropylene bonded to a layer of material (14).

2. A rubber composite bonded under heat and pressure comprising a layer to be bonded (14), a thermosetting elastomer (16), and an adhesive formulation (12) of copolymer of ethylene and methacrylic acid blended with polypropylene in a ratio of about 70-80% of the polymer to 20-30% polypropylene, interposed between the layer (14) and the thermosetting elastomer (16).

3. A method for forming a bonded adhesive-backed composite material comprising the steps of presenting a layer of material (14) having a layer bonding surface, and applying an adhesive formulation (12) of copolymer of ethylene and methacrylic acid blended with polypropylene in a ratio of about 70-80% of the polymer to 20-30% polypropylene, directly onto the layer bonding surface, for securement thereto, whereby the bonded adhesive-backed layer of material is adapted to be directly bonded to a bonding surface of a thermosetting elastomer (16) upon heating the thermosetting elastomer bonding surface, and pressing the layer (14) and the elastomer (16) together.

4. The invention according to claims 2 or 3 wherein the adhesive (12) is a hot melt adhesive which is heated to 260°-300° Fahrenheit, and the bonding surface (12) of the thermosetting elastomer (16) is heated to 280°-320° Fahrenheit.

5. The invention according to claim 2, 3 or 4 wherein the thermosetting elastomer (16) comprises EPDM rubber.

6. The invention as claimed in any of claims 1-5 wherein the copolymer of ethylene and methacrylic acid contains between 20% and 40% methacrylate.

7. The invention according to any one of claims 1-6 wherein the layer (14) comprises a fabric formed from a natural fiber such as cotton or wool, or synthetic polymer fiber such as nylon, or a combination thereof, or a polyester film such as mylar.

8. A bonded composite weatherseal comprising an extruded, ethylene/propylene/diene rubber profile (22,24,26,28), a layer of a material (14) preferably selected from the group consisting of fabric such as a fabric formed from fibers (Fig.5) and plastic such as polyester film (Fig.6), and a layer of hot melt adhesive (12) disposed between the extruded profile (22,28) and the layer (14).

9. The composite weatherseal of claim 8 in which the adhesive (12) is pre-applied to the layer (14) for bonding to the rubber profile (22,28) under heat and pressure.

10. An automobile weatherseal comprising an extruded ethylene/propylene/diene rubber body (22,24,26,28) and a hot melt bonding agent (12) comprising a copolymer of ethylene and methacrylic acid, preferably containing 20-24% methacrylate, blended in a 70-30% ratio with polypropylene, bonded to the rubber body (22,24,26,28).

11. A method for bonding a layer (14) of material to an EPDM rubber profile (22,24,26,28) comprising providing an adhesive (12) that bonds to untreated EPDM rubber under heat and pressure, and pre-applying the adhesive (12) to the layer (14) in a manner as to permit unlimited storage, and bonding the layer (14) to the EPDM rubber profile (22,24,26,28) under heat and pressure.

FIG. 1
(PRIOR ART)

FIG. 2

FIG. 3

FIG. 4

FIG. 5

FIG. 6